(19) Europäisches Patentamt
European Patent Office
Office européen des brevets

(11) **EP 2 197 790 B1**

(12) **EUROPEAN PATENT SPECIFICATION**

(45) Date of publication and mention
of the grant of the patent:
**18.04.2018 Bulletin 2018/16**

(21) Application number: **08804724.6**

(22) Date of filing: **25.09.2008**

(51) Int Cl.:
***C01B 33/18*** *(2006.01)*     ***C01B 37/00*** *(2006.01)*
***C01B 39/06*** *(2006.01)*

(86) International application number:
**PCT/EP2008/062826**

(87) International publication number:
**WO 2009/050012 (23.04.2009 Gazette 2009/17)**

(54) **SILICON- TITANIUM MIXED OXIDE POWDER, DISPERSION THEREOF AND TITANIUM-CONTAINING ZEOLITE PREPARED THEREFROM**

SILICIUM-TITAN-MISCHOXIDPULVER, DISPERSION UND DARAUS HERGESTELLTES TITANHALTIGES ZEOLITH

POUDRE D'OXYDE MIXTE DE SILICIUM ET DE TITANE, DISPERSION DE CELLE-CI ET ZÉOLITE CONTENANT DU TITANE PRÉPARÉE À PARTIR DE CELLE-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.10.2007   DE 102007049743**

(43) Date of publication of application:
**23.06.2010   Bulletin 2010/25**

(73) Proprietor: **Evonik Degussa GmbH**
**45128 Essen (DE)**

(72) Inventors:
• SCHUMACHER, Kai
  65719 Hofheim (DE)
• MÖRTERS, Martin
  79618 Rheinfelden (DE)
• MANGOLD, Helmut
  63517 Rodenbach (DE)
• HASENZAHL, Steffen
  63454 Hanau (DE)

(56) References cited:
EP-A1- 0 814 058          EP-A1- 1 553 054
WO-A1-2005/110922   WO-A1-2007/118739
US-A1- 2003 129 153

**Description**

The invention relates to a pyrogenic silicon-titanium mixed oxide powder and to the preparation thereof. The invention further relates to a dispersion comprising the pyrogenic silicon-titanium mixed oxide powder. The invention further relates to a process for preparing a titanium-containing zeolite by means of the pyrogenic silicon-titanium mixed oxide powder or a dispersion comprising this powder. The invention further relates to the titanium-containing zeolites obtainable by this process and to their use as a catalyst.

In US2003/129153 a silicon-titanium mixed oxide powder is disclosed, which is prepared by flame hydrolysis and which contains primary particles, wherein the ratio by weight of silicon dioxide/titanium dioxide on the surface of the primary particles is greater than that within the total primary particle.also disclosed is a dispersion comprising the silicon-titanium mixed oxide powder

EP-A-814058 discloses the use of silicon-titanium mixed oxide powders for preparing titanium-containing zeolites. Titanium-containing zeolites are efficient catalysts for the oxidation of olefins with hydrogen peroxide. They are obtained by a hydrothermal synthesis proceeding from silicon-titanium mixed oxide powders in the presence of a template. EP-A-814058 discloses that pyrogenic silicon-titanium mixed oxides having a silicon dioxide content of 75 to 99.9% by weight and a titanium dioxide content of 0.1 to 25% by weight can be used for this purpose. A particularly advantageous composition is one which comprises 90 to 99.5% by weight of silicon dioxide and 0.5 to 5% by weight of titanium dioxide. The templates used may be amines, ammonium compounds or alkali metal/alkaline earth metal hydroxides.

A disadvantage of the process disclosed in EP-A-814058 is the long reaction time which is required for the conversion of the silicon-titanium mixed oxide in the presence of the template. Moreover, not all titanium-containing zeolites obtained according to EP-A-814058 have a sufficient catalytic activity.

It was therefore an object of the invention to provide a silicon-titanium mixed oxide with which the reaction times in the preparation of the titanium-containing zeolite can be reduced. It was a further object of the invention to provide a titanium-containing zeolite with high catalytic activity.

The invention provides a pyrogenic silicon-titanium mixed oxide powder, in which

- the BET surface area is 200 to 400 $m^2$/g and
- the ratio of DBP number/BET surface area is 0.5 to 1.2, and
- which has a silicon dioxide content of 93.5 to 95.4% by weight and a titanium dioxide content of 4.6 to 6.5% by weight, where the sum of silicon dioxide content and titanium dioxide content is greater than 99.7% by weight, where all percentages are based on the total amount of the powder.

"Pyrogenic" is understood to mean mixed metal oxide particles obtained by flame oxidation and/or flame hydrolysis. Oxidizable and/or hydrolysable starting materials are generally oxidized or hydrolysed in a hydrogen-oxygen flame. The inventive mixed metal oxide particles are very substantially pore-free and have free hydroxyl groups on the surface. They are present in the form of aggregated primary particles.

It has been found that a high BET surface area significantly reduces the duration to prepare a titanium-containing zeolite from the inventive silicon-titanium mixed oxide powder.

The DBP number (DBP = dibutyl phthalate) is a measure of the structure or the degree of coalescence of the particles of the powder and its dispersibility. The inventive powder has good dispersibility. In the present invention, the DBP number/BET surface area ratio is 0.5 to 1.2, preferably 0.8 to 1.1. The unit of this parameter is (g/100g)/($m^2$/g). The DBP number/BET surface area ratio for pure pyrogenic silicon dioxide powders is > 1.2. For example, the ratio for AEROSIL® 200 is approx. 1.5, and that for AEROSIL® 300 is approx. 1.3 (both Evonik Degussa).

Preference is given to an inventive silicon-titanium mixed oxide powder with a BET surface area of 250 to 350 $m^2$/g and more preferably one of 300 ± 30 $m^2$/g.

Preference is further given to a silicon-titanium mixed oxide powder having a silicon dioxide content of 94 to 95% by weight and a titanium dioxide content of 5 to 6% by weight, where the sum of silicon dioxide content and titanium dioxide content is greater than 99.9% by weight. Particular preference is given to a silicon-titanium mixed oxide powder having a silicon dioxide content of 95.0 ± 0.25% by weight and a titanium dioxide content of 5 ± 0.25% by weight, where the sum of silicon dioxide content and titanium dioxide content is greater than 99.9% by weight.

The sum of silicon dioxide content and titanium dioxide content in the inventive powder is greater than 99.7% by weight and preferably greater than 99.9% by weight. The content of the metals Al, Ca, Co, Fe, K, Na, Ni and Zn is preferably less than 50 ppm each and more preferably less than 25 ppm each. The content of chloride is preferably less than 700 ppm. It has been found to be advantageous for the preparation of titanium-containing zeolites when the contents of these metals and chloride do not exceed these values. These impurities may originate from the feedstocks and/or may be caused by the process.

The invention further provides a process for preparing the inventive silicon-titanium mixed oxide powder, in which

- 93.5 to 95.4 parts by weight, calculated as $SiO_2$, of a silicon chloride and 4.6 to 6.5 parts by weight, calculated as $TiO_2$, of a titanium chloride are evaporated and the vapours are transferred into a mixing chamber, and, separately therefrom, hydrogen and primary air are transferred into the mixing chamber,

- then the mixture of the vapours of silicon chloride and titanium chloride, hydrogen-containing combustion gas and primary air is ignited in a burner and the flame burns into a reaction chamber,

- in addition, secondary air is introduced into the reaction chamber, then the solid is removed from gaseous substances, and

- subsequently, the solid is very substantially freed of halide-containing substances by a treatment with steam at temperatures of 250 to 700°C,

- where the amount of the feedstocks consisting of silicon chloride, titanium chloride, combustion gas, primary air and secondary air is selected so as to result in an adiabatic flame temperature $T_{ad}$ for which

$$900°C < T_{ad} < 1300°C,$$

where
$T_{ad}$ = temperature of feedstocks + sum of the reaction enthalpies of the subreactions/heat capacity of the substances which leave the reaction chamber including silicon-titanium mixed oxide, water, hydrogen chloride, if appropriate carbon dioxide, oxygen, nitrogen, and if appropriate of the carrier gas if it is not air or nitrogen, the basis being the specific heat capacity of these substances at 1000°C.

The specific heat capacities can be determined, for example, with the aid of the VDI-Wärmeatlas (Chapter 7.1 to 7.3 and 3.7, 8th edition).
The conversion of the silicon chlorides and titanium chlorides in the presence of oxygen and of a combustion gas affords silicon-titanium mixed oxide, water, hydrochloric acid, and carbon dioxide in the case of carbon-containing silicon and/or titanium compounds and/or carbon-containing combustion gases. The reaction enthalpies of these reactions can be calculated by means of the standard works known to those skilled in the art.
Table 1 states some selected values of reaction enthalpies of the conversion of silicon halides and titanium tetrachloride in the presence of hydrogen and oxygen.
More preferably, methyltrichlorosilane (MTCS, $CH_3SiCl_3$), trichlorosilane (TCS, $SiHCl_3$) and/or dichlorosilane (DCS, $SiH_2Cl_2$) and titanium tetrachloride can be used.

**Table 1: Reaction enthalpies**

|  | kJ/mol |
| --- | --- |
| $H_2$ | -241.8 |
| $SiCl_4$ | -620.1 |
| $SiHCl_3$ | -659.4 |
| $SiH_2Cl_2$ | -712.3 |
| $C_3H_7SiCl_3$ | -2700.2 |
| $CH_3SiCl_3$ | -928.3 |
| $(CH_3)_3SiCl$ | -2733.8 |
| $TiCl_4$ | -553.4 |

Suitable combustion gases are hydrogen, methane, ethane, propane and/or natural gas, preference being given to hydrogen.
It may also be advantageous when the exit rate of the reaction mixture from the mixing chamber into the reaction chamber is 10 to 80 m/s.
The vapours of the silicon chloride and of the titanium tetrachloride can also be transferred into the mixing chamber by means of a carrier gas, in mixed form or separately.
The combustion gas, primary air and/or secondary air feedstocks can be introduced preheated. A suitable temperature range is 50 to 400°C.

In addition, primary and/or secondary air can be enriched with oxygen.

The process according to the invention can preferably be performed by using $SiCl_4$ as the silicon halide and $TiCl_4$ as the titanium halide, and in such a way that the adiabatic flame temperature $T_{ad}$ = 1100 to 1250°C.

The invention further provides a dispersion which has a pH of 9 to 14 and comprises the inventive pyrogenic silicon-titanium mixed oxide powder with a mean aggregate diameter of the silicon-titanium mixed oxide particles in the dispersion of less than 200 nm and water, where 5 ≤ mol of water/mol of silicon-titanium mixed oxide ≤ 30, preferably 10 ≤ mol of water/mol of silicon-titanium mixed oxide ≤ 20 and more preferably 12 ≤ mol of water/mol of silicon-titanium mixed oxide ≤ 17.

The pH of the dispersion can be adjusted by means of any bases soluble in the liquid phase of the dispersion. For example, KOH, NaOH, amines and/or ammonium hydroxides can be used. The dispersion preferably comprises a basic, quaternary ammonium compound. Particular preference is given to dispersions which comprise tetraalkylammonium hydroxides, for example tetraethylammonium hydroxide, tetra-n-propylammonium hydroxide and/or tetra-n-butylammonium hydroxide.

The proportion of quaternary, basic ammonium compound in the inventive dispersion is not limited. If the dispersion is to be stored for a prolonged period, it may be advantageous to add to it only a proportion of the amount of the dispersion needed to prepare a titanium-containing zeolite. The quaternary, basic ammonium compound can preferably be added in such an amount as to result in a pH of 9 to 12. If the dispersion is, for example, to be used immediately after its preparation to prepare a titanium-containing zeolite, the dispersion may also already comprise the entire amount of quaternary, basic ammonium compound.

In that case, preferably, 0.005 ≤ mol of ammonium compound/mol of silicon-titanium mixed oxide < 0.20, and, more preferably, 0.08 ≤ mol of ammonium compound/mol of silicon-titanium mixed oxide ≤ 0.17.

The invention further provides a process for preparing the inventive dispersion, in which

- to a liquid phase which is circulated by means of a rotor/stator machine from a reservoir and is composed of water and one or more bases which are present in such an amount that the pH is 10 to 12,

- by means of a filling apparatus, continuously or batchwise and with the rotor/stator machine running, such an amount of silicon-titanium mixed oxide powder according to Claims 1 to 5 is introduced into the shear zone between the slots of the rotor teeth and the stator slots so as to result in a dispersion with a content of silicon-titanium mixed oxide powder of 20 to 40% by weight, the pH being kept at 10 to 12 by continuous, further addition of the basic, quaternary ammonium compound, and

- once all silicon-titanium mixed oxide powder has been added, the filling apparatus is closed and shearing is continued such that the shear rate is in the range between 10 000 and 40 000 s$^{-1}$, and

- if appropriate, water and/or further base is then added in order to adjust the content of silicon-titanium mixed oxide powder and the pH.

The invention further provides a process for preparing a titanium-containing zeolite, in which the inventive silicon-titanium mixed oxide powder and a basic, quaternary ammonium compound are treated in an aqueous medium at a temperature of 150 to 220°C over a period of less than 12 hours.

Preference is given to performing the process in such a way that 5 ≤ mol of water/mol of silicon-titanium mixed oxide ≤ 30. Particular preference is given to the range of 10 ≤ mol of water/mol of silicon-titanium mixed oxide ≤ 20 and very particular preference to that of 12 ≤ mol of water/mol of silicon-titanium mixed oxide ≤ 17.

It is also advantageous to perform the process in such a way that 0.005 ≤ mol of ammonium compound/mol of silicon-titanium mixed oxide < 0.20. Particular preference is given to the range of 0.08 ≤ mol of ammonium compound/mol of silicon-titanium mixed oxide ≤ 0.17.

Basic, quaternary ammonium compounds serve as templates which determine the crystal structure by incorporation into the crystal lattice. Tetra-n-propylammonium hydroxide is preferably used for the preparation of titanium silicalite-1 (MFI structure), tetra-n-butylammonium hydroxide for the preparation of titanium silicalite-1 (MEL structure) and tetraethylammonium hydroxide for the preparation of titanium β-zeolites (BEA crystal structure).

The invention further provides a process for preparing a titanium-containing zeolite, in which the inventive dispersion, if appropriate with further addition of a basic, quaternary ammonium compound, is treated at a temperature of 150 to 220°C over a period of less than 12 hours.

Under the above conditions of the process according to the invention, the crystallization time is usually less than 12 hours. The crystals are separated out by filtering, centrifuging or decanting and washed with a suitable wash liquid, preferably water. The crystals are then dried if required and calcined at a temperature between 400°C and 1000°C, preferably between 500°C and 750°C, in order to remove the template.

The particle fineness of less than 200 nm in the dispersion leads to a rapid dissolution of the particles and formation of the titanium-containing zeolites.

A titanium-containing zeolite is obtainable by the process according to the invention proceeding from silicon-titanium mixed oxide powder.

A titanium-containing zeolite is obtainable by the process according to the invention proceeding from the dispersion comprising silicon-titanium mixed oxide powder.

Both titanium-containing zeolites are obtained in powder form. For use as an oxidation catalyst, they are, if required, converted by known methods of shaping pulverulent catalysts, for example pelletization, spray-drying, spray-pelletization or extrusion, to a form suitable for use, for example to micropellets, spheres, tablets, solid cylinders, hollow cylinders or honeycomb.

The titanium-containing zeolites can be used as catalysts in oxidation reactions with hydrogen peroxide. In particular, they can be used as catalysts in the epoxidation of olefins with the aid of aqueous hydrogen peroxide in a water-miscible solvent.

**Examples:**

Analysis:

BET surface area: the BET surface area is determined in DIN 66131.

DBP absorption: the dibutyl phthalate absorption is measured with a RHEOCORD 90 instrument from Haake, Karlsruhe.

To this end, 8 g of the powder, accurately to 0.001 g, are introduced into a kneading chamber which is closed with a lid and dibutyl phthalate is metered in at a defined metering rate of 0.0667 ml/s through a hole in the lid. The kneader is operated at a motor speed of 125 revolutions per minute. On attainment of the maximum torque, the kneader and the DPB addition are automatically switched off. The DPB absorption is calculated from the amount of DBP consumed and the amount of the particles weighed in according to:

$$\text{DBP number (g/100 g)} = (\text{consumption of DBP in g/initial weight of particles in g}) \times 100.$$

Feedstocks: The silicon tetrachloride and titanium tetrachloride feedstocks of Examples 1 to 5 have contents of Na, K, Fe, Co, Ni, Al, Ca and Zn of less than 50 ppm.

Examples 1 to 4: Titanium-silicon mixed oxide powders according to the invention

Example 1: 6.0 kg/h of silicon tetrachloride and 0.26 kg/h of titanium tetrachloride are evaporated. The vapours are transferred into a mixing chamber by means of 15 $m^3$ (STP)/h of nitrogen as a carrier gas. Separately therefrom, 3.3 $m^3$ (STP)/h of hydrogen and 11.6 $m^3$ (STP)/h of primary air are introduced into the mixing chamber. In a central tube, the reaction mixture is fed to a burner and ignited. The flame burns into a water-cooled flame tube. In addition, 13 $m^3$ (STP)/h of secondary air and 0.5 $m^3$ (STP)/h of peripheral hydrogen are introduced into the reaction chamber. The powder formed is separated out in a downstream filter and then treated in countercurrent with steam at 520°C.

Examples 2-4 are carried out analogously to Example 1 with the amounts listed in the table.

Example 5 is a comparative example whose composition is within the range of the silicon dioxide and titanium dioxide contents claimed, but has a significantly lower BET surface area than the powder claimed.

The substance parameters of the resulting powders are compiled in the table.

In all examples, the content of Na <10 ppm, K <10 ppm, Fe $\leq$ 1 ppm, Co <1 ppm, Ni <1 ppm, Al <10 ppm, Ca <10 ppm, Zn <10 ppm.

**Table: Feedstocks and amounts used, analytical values of the silicon-titanium mixed oxide powder**

| Example | | 1 | 2 | 3 | 4 | 5 |
|---|---|---|---|---|---|---|
| **SiCl$_4$** | kg/h | 6.0 | 6.0 | 6.0 | 5.15 | 5.15 |
| **TiCl$_4$** | kg/h | 0.26 | 0.245 | 0.35 | 0.25 | 0.25 |
| **H$_2$ core** | m$^3$ (STP)/h | 3.3 | 3.3 | 3.3 | 2.10 | 3.50 |

(continued)

| Example | | 1 | 2 | 3 | 4 | 5 |
|---|---|---|---|---|---|---|
| $H_2$ periphery | $m^3$ (STP)/h | 0.5 | 0.5 | 0.5 | 1.0 | 1.1 |
| Primary air | $m^3$ (STP)/h | 11.6 | 11.6 | 10.2 | 12.7 | 10.0 |
| Secondary air | $m^3$ (STP)/h | 13.0 | 14 | 13.0 | 15.0 | 15.1 |
| $T_{ad}$ | °C | 1156 | 1124 | 1268 | 928 | 1308 |
| $V_{Br}$ | m/s | 34 | 38 | 31 | 45 | 31 |
| BET | $m^2$/g | 305 | 311 | 208 | 364 | 85 |
| DBP number | g/100g | 275 | 263 | 222 | 345 | 125 |
| DBP/BET | g/100g/$m^2$/g | 0.9 | 0.85 | 1.07 | 0.95 | 1.47 |
| $SiO_2$ | % by wt. | 95 | 95.5 | 94.5 | 94.5 | 94.5 |
| $TiO_2$ | 5 by wt. | 5 | 4.6 | 5.5 | 5.5 | 5.5 |

Example 6: Preparation of a dispersion (inventive)

A 100 1 stainless steel mixing vessel is initially charged with 32.5 kg of demineralized water. Subsequently, a pH of approx. 11 is established with tetra-n-propylammonium hydroxide solution (TPAOH)(40% by weight in water). Then, with the aid of the suction nose of the Ystral Conti-TDS 4 (stator slots: 6 mm ring and 1 mm ring, rotor/stator distance approx. 1 mm), under shear conditions, 17.5 kg of the silicon-titanium mixed oxide powder from Example 1 are sucked in. During the suction of the powder, by further addition of the TPAOH, the pH is kept between 10 and 11 (the silicon-titanium mixed oxide powder used has an acidic character; 4 percent dispersion in water: pH approx. 3.6). After the suction has ended, the suction nozzle is closed, the pH is adjusted to 11 with TPAOH and the 33 percent by weight predispersion is sheared at 3000 rpm for another 10 min. Undesired heating of the dispersion as a result of the high energy input is countered by a heat exchanger and the temperature rise is restricted to max. 40°C.
In order to ensure a very high storage stability, the product is diluted with 25.8 kg of demineralized water and mixed thoroughly, and the pH of 11.0 is re-established once again with a little TPAOH.
Silicon-titanium mixed oxide concentration: 22% by weight. A total of 3.8 kg of tetra-n-propylammonium hydroxide solution (40% by weight in water) are used.
The dispersion has the following values:

Water/silicon-titanium mixed oxide 11.5
Mean aggregate diameter 92 nm (determined with Horiba LA 910)

Example 6A: Preparation of a dispersion (comparative)

A 100 1 stainless steel mixing vessel is initially charged with 32.5 kg of demineralized water. Subsequently, with the aid of the suction nose of Ystral Conti-TDS 4 (stator slots: 6 mm ring and 1 mm ring, rotor/stator distance approx. 1 mm), under shear conditions, 13.6 kg of the silicon-titanium mixed oxide powder from Example 1 are sucked in.
This forms a dispersion having a content of silicon-titanium mixed oxide of 28% by weight, which possesses a high viscosity and a low stability.
The examples for the preparation of dispersions, 6 and 6A, show that, even though the inventive silicon-titanium mixed oxide powder consists predominantly of silicon dioxide, a dispersion technique known for silicon dioxide in the acidic pH range is not suitable for preparing extremely fine (< 200 nm) and highly filled dispersions. Instead, the dispersion of the inventive silicon-titanium mixed oxide powder in the alkali range leads to a dispersion with the desired particle fineness and solids content.
A dispersion of pure silicon dioxide with comparable BET surface area, for example CAB-O-SIL® (H-5, from Cabot, BET surface area= 300 $m^2$/g), would not lead to the desired particle fineness and solids content under these conditions.

Example 7: Preparation of a titanium-containing zeolite proceeding from silicon-titanium mixed oxide powder (inventive)

A polyethylene beaker is initially charged with 137.0 g of a tetra-n-propylammonium hydroxide solution (40% by weight in water), and 434.2 g of deionized water and, with intensive stirring, 111.1 g of the pyrogenic silicon-titanium mixed oxide powder from Example 1 are incorporated. The resulting gel is first aged at 80°C with intensive stirring for 2 hours and then crystallized in an autoclave at 180°C for 10 hours. The resulting solid is removed from the mother liquor by centrifugation, washed three times with 250 ml each time of deionized water, dried at 90°C and calcined in an air atmosphere at 550°C for 4 hours.

Water/silicon-titanium mixed oxide 15.7 Tetrapropylammonium hydroxide/silicon-titanium mixed oxide 0.15

Example 8 (Comparative Example) is carried out analogously to Example 7, but using the silicon-titanium mixed oxide powder from Example 5. The incorporation of the powder requires significantly more time than in Example 7.

Example 9: Preparation of a titanium-containing zeolite proceeding from a dispersion comprising silicon-titanium mixed oxide powder

A polyethylene beaker is initially charged with 505 g of the dispersion from Example 6, 46.7 g of deionized $H_2O$ and 130.6 g of a tetra-n-propylammonium hydroxide solution (40% by weight in water) and first aged at 80°C with stirring for 4 hours and then crystallized in an autoclave at 180°C for 10 hours. The resulting solid is removed from the mother liquor by centrifuging, washed three times with 250 ml each time of deionized water, dried at 90°C and calcined in an air atmosphere at 550°C for four hours.

Water/silicon-titanium mixed oxide 15.6 Tetrapropylammonium hydroxide/silicon-titanium mixed oxide 0.14

The X-ray diffractogram of the crystals obtained from Examples 7 to 9 shows the diffraction pattern typical of the MFI structure, and the IR spectrum the characteristic band at 960 cm$^{-1}$. The UV-vis spectrum shows that the sample is free of titanium dioxide and titanates.

In the epoxidation of propylene with aqueous hydrogen peroxide solution, for the catalytic activity of the titanium silicalites obtained from Examples 7, 8 and 9: 9 > 7 >> 8.

**Claims**

1.  Pyrogenic silicon-titanium mixed oxide powder, **characterized in that**

    - the BET surface area is 200 to 400 m$^2$/g,
    - the ratio of DBP number/BET surface area is 0.5 to 1.2,
    - it has a silicon dioxide content of 93.5 to 95.4% by weight and a titanium dioxide content of 4.6 to 6.5% by weight, where the sum of silicon dioxide content and titanium dioxide content is greater than 99.7% by weight, where all percentages are based on the total amount of the powder.

2.  . Pyrogenic silicon-titanium mixed oxide powder according to Claim 1, **characterized in that** the BET surface area is 250 to 350 m$^2$/g.

3.  . Pyrogenic silicon-titanium mixed oxide powder according to Claims 1 and 2, **characterized in that** the silicon dioxide content is 94 to 95% by weight and a titanium dioxide content 5 to 6% by weight, and the sum of silicon dioxide content and titanium dioxide content is greater than 99.9% by weight

4.  . Pyrogenic silicon-titanium mixed oxide powder according to Claims 1 to 3, **characterized in that** the content of Al, Ca, Co, Fe, K, Na, Ni, and Zn is less than 50 ppm.

5.  . Pyrogenic silicon-titanium mixed oxide powder according to Claims 1 to 4, **characterized in that** the content of chloride is less than 700 ppm.

6.  . Process for preparing the silicon-titanium mixed oxide powder according to Claims 1 to 5, **characterized in that**

    - 93.5 to 95.4 parts by weight, calculated as $SiO_2$, of silicon halide and 4.6 to 6.5 parts by weight, calculated as $TiO_2$, of titanium halide are evaporated and the vapours are transferred into a mixing chamber,
    - separately therefrom, hydrogen and primary air are transferred into the mixing chamber,
    - then the mixture of the vapours of silicon halide and titanium halide, hydrogen-containing combustion gas and primary air is ignited in a burner and the flame burns into a reaction chamber,
    - in addition, secondary air is introduced into the reaction chamber, then the solid is removed from gaseous substances, and
    - subsequently, the solid is very substantially freed of halide-containing substances by a treatment with steam at temperatures of 250 to 700°C,
- where the amount of the feedstocks consisting of silicon chloride, titanium chloride, combustion gas, primary air and secondary air is selected so as to result in an adiabatic flame temperature $T_{ad}$ for which

$$900°C < T_{ad} < 1300°C,$$

where
$T_{ad}$ = temperature of feedstocks + sum of the reaction enthalpies of the subreactions/heat capacity of the substances which leave the reaction chamber including silicon dioxide, water, hydrogen chloride, if appropriate carbon dioxide, oxygen, nitrogen, and if appropriate of the carrier gas if it is not air or nitrogen, the basis being the specific heat capacity of these substances at 1000°C.

7. . Process according to Claim 6, **characterized in that** the silicon halide used is $SiCl_4$, the titanium halide used is $TiCl_4$, and $T_{ad}$ = 1050 $\pm$ 50°C.

8. . Process according to Claims 6 and 7, **characterized in that** the outflow rate $v_{Br}$ of the gases used from the burner into the reaction chamber is 10 to 80 m/s.

9. . Dispersion which has a pH of 9 to 14 and comprises the pyrogenic silicon-titanium mixed oxide powder according to Claims 1 to 5 with a mean aggregate diameter of the silicon-titanium mixed oxide particles in the dispersion of less than 200 nm and water, where $5 \leq$ mol of water/mol of silicon-titanium mixed oxide $\leq 30$.

10. . Dispersion according to Claim 9, **characterized in that** it comprises a basic, quaternary ammonium compound.

11. . Dispersion according to Claim 10, **characterized in that** $0.005 \leq$ mol of ammonium compound/mol of silicon-titanium mixed oxide < 0.20.

12. . Process for preparing the dispersion according to Claims 9 to 11, **characterized in that**

- to a liquid phase which is circulated by means of a rotor/stator machine from a reservoir and is composed of water and one or more bases which are present in such an amount that the pH is 10 to 12,
- by means of a filling apparatus with the rotor/stator machine running, such an amount of silicon-titanium mixed oxide powder according to Claims 1 to 5 is introduced into the shear zone between the slots of the rotor teeth and the stator slots so as to result in a dispersion with a content of silicon-titanium mixed oxide powder of 20 to 40% by weight, the pH being kept at 10 to 12 by continuous, further addition of the basic, quaternary ammonium compound, and
- once all silicon-titanium mixed oxide powder has been added, the filling apparatus is closed and shearing is continued such that the shear rate is in the range between 10 000 and 40 000 $s^{-1}$, and
- if appropriate, water and/or further base is then added in order to adjust the content of silicon-titanium mixed oxide powder and the pH.

13. . Process for preparing a titanium-containing zeolite, **characterized in that** the silicon-titanium mixed oxide powder according to Claims 1 to 5 and a basic, quaternary ammonium compound are treated in an aqueous medium at a temperature of 150 to 220°C over a period of less than 12 hours.

14. . Process according to Claim 13, **characterized in that** $5 \leq$ mol of water/mol of silicon-titanium mixed oxide $12 \leq 30$.

15. . Process according to Claims 13 and 14, **characterized in that** $0.005 \leq$ mol of ammonium compound/mol of silicon-titanium mixed oxide < 0.20.

16. . Process according to Claims 13 to 15, **characterized in that** the basic, quaternary ammonium compound used is a tetraalkylammonium hydroxide.

17. . Process for preparing a titanium-containing zeolite, **characterized in that** the dispersion according to Claims 9 to 11, if appropriate with further addition of a basic, quaternary ammonium compound, is treated at a temperature of 150 to 220°C over a period of less than 12 hours.

18. . Process according to Claims 13 to 17, **characterized in that** the titanium-containing zeolite is removed, dried and calcined.

**Patentansprüche**

1.  Pyrogenes Silicium-Titan-Mischoxidpulver, **dadurch gekennzeichnet, dass**

    - die BET-Oberfläche 200 bis 400 $m^2/g$ ist,
    - das Verhältnis DBP-Zahl/BET-Oberfläche 0,5 bis 1,2 ist,
    - es einen Siliciumdioxid-Anteil von 93,5 bis 95,4 Gew.-% und einen Titandioxid-Anteil von 4,6 bis 6,5 Gew.-% aufweist, wobei die Summe aus Siliciumdioxid-Anteil und Titandioxid-Anteil größer als 99,7 Gew.-% ist, wobei sich alle Prozentangaben auf die Gesamtmenge des Pulvers beziehen.

2.  Pyrogenes Silicium-Titan-Mischoxidpulver nach Anspruch 1, **dadurch gekennzeichnet, dass** die BET-Oberfläche 250 bis 350 $m^2/g$ ist.

3.  Pyrogenes Silicium-Titan-Mischoxidpulver nach den Ansprüchen 1 und 2, **dadurch gekennzeichnet, dass** der Siliciumdioxid-Anteil 94 bis 95 Gew.-% und ein Titandioxid-Anteil 5 bis 6 Gew.-% und die Summe aus Siliciumdioxid-Anteil und Titandioxid-Anteil größer als 99,9 Gew.-% ist.

4.  Pyrogenes Silicium-Titan-Mischoxidpulver nach den Ansprüchen 1 bis 3, **dadurch gekennzeichnet, dass** der Anteil an Al, Ca, Co, Fe, K, Na, Ni, und Zn kleiner als 50 ppm ist.

5.  Pyrogenes Silicium-Titan-Mischoxidpulver nach den Ansprüchen 1 bis 4, **dadurch gekennzeichnet, dass** der Anteil an Chlorid kleiner als 700 ppm ist.

6.  Verfahren zur Herstellung des Silicium-Titan-Mischoxidpulvers gemäß den Ansprüchen 1 bis 5, **dadurch gekennzeichnet, dass** man

    - 93,5 bis 95,4 als $SiO_2$ berechnete Gewichtsanteile Siliciumhalogenid und 4,6 bis 6,5 als $TiO_2$ berechnete Gewichtsanteile Titanhalogenid verdampft und, die Dämpfe in eine Mischkammer überführt,
    - getrennt hiervon Wasserstoff und Primärluft in die Mischkammer überführt,
    - anschließend das Gemisch aus den Dämpfen von Siliciumhalogenid und Titanhalogenid, wasserstoffhaltigem Brenngas und Primärluft in einem Brenner zündet und die Flamme in eine Reaktionskammer hinein verbrennt,
    - zusätzlich Sekundärluft in die Reaktionskammer einbringt, anschließend den Feststoff von gasförmigen Stoffen abtrennt, und
    - nachfolgend den Feststoff durch eine Behandlung mit Wasserdampf bei Temperaturen von 250 bis 700°C von halogenidhaltigen Substanzen weitestgehend befreit,
    - wobei die Menge der Einsatzstoffe bestehend aus Siliciumchlorid, Titanchlorid, Brenngas, Primärluft und Sekundärluft so gewählt ist, dass eine adiabate Flammentemperatur $T_{ad}$ resultiert, für die gilt

    $$900°C < T_{ad} < 1300°C,$$

    mit

    $T_{ad}$ = Temperatur Einsatzstoffe + Summe der Reaktionsenthalpien der Teilreaktionen/ Wärmekapazität der Stoffe, die die Reaktionskammer verlassen, umfassend Siliciumdioxid, Wasser, Chlorwasserstoff, gegebenenfalls Kohlendioxid, Sauerstoff, Stickstoff, und gegebenenfalls des Traggases, wenn dieses nicht Luft oder Stickstoff ist, wobei die spezifische Wärmekapazität dieser Stoffe bei 1000°C zugrunde gelegt wird.

7.  Verfahren nach Anspruch 6, **dadurch gekennzeichnet, dass** als Siliciumhalogenid $SiCl_4$ eingesetzt wird, als Titanhalogenid $TiCl_4$ eingesetzt wird und $T_{ad}$ = 1050 ± 50°C ist.

8.  Verfahren nach den Ansprüchen 6 und 7, **dadurch gekennzeichnet, dass** die Ausströmgeschwindigkeit $v_{Br}$ der eingesetzten Gase aus dem Brenner in die Reaktionskammer 10 bis 80 m/s ist.

9.  Dispersion mit einem pH-Wert von 9 bis 14, enthaltend das pyrogene Silicium-Titan-Mischoxidpulver gemäß den Ansprüchen 1 bis 5 mit einem mittleren Aggregatdurchmesser der Silicium-Titan-Mischoxid-Partikel in der Dispersion von weniger als 200 nm und Wasser, wobei 5 ≤ mol Wasser / mol Silicium-Titan-Mischoxid ≤ 30 gilt.

**10.** Dispersion nach Anspruch 9, **dadurch gekennzeichnet, dass** sie eine basische, quaternäre Ammoniumverbindung enthält.

**11.** Dispersion nach Anspruch 10, **dadurch gekennzeichnet, dass** 0,005 ≤ mol Ammoniumverbindung / mol Silicium-Titan-Mischoxid < 0,20 gilt.

**12.** Verfahren zur Herstellung der Dispersion gemäß den Ansprüchen 9 bis 11, **dadurch gekennzeichnet, dass** man

- zu einer aus einer Vorlage über eine Rotor-/Statormaschine im Kreis geführten flüssigen Phase aus Wasser und einer oder mehrerer Basen die in einer Menge vorliegen, dass der pH-Wert 10 bis 12 ist,
- über eine Einfüllvorrichtung bei laufender Rotor-/Statormaschine eine solche Menge Silicium-Titan-Mischoxidpulver gemäß den Ansprüchen 1 bis 5 in die Scherzone zwischen den Schlitzen der Rotorzähne und der Statorschlitze einbringt, dass eine Dispersion mit einem Gehalt an Silicium-Titan-Mischoxidpulver von 20 bis 40 Gew.-% resultiert, wobei man den pH-Wert durch kontinuierliche, weitere Zugabe der basischen, quaternären Ammoniumverbindung auf 10 bis 12 hält, und man
- nachdem alles Silicium-Titan-Mischoxidpulver zugegeben ist, die Einfüllvorrichtung schließt und so weiterschert, dass die Scherrate im Bereich zwischen 10000 bis 40000 s$^{-1}$ liegt, und
- gegebenenfalls anschließend Wasser und/oder weitere Base hinzugibt um den Gehalt an Silicium-Titan-Mischoxidpulver und den pH-Wert einzustellen.

**13.** Verfahren zur Herstellung eines titanhaltigen Zeolithen, **dadurch gekennzeichnet, dass** man das Silicium-Titan-Mischoxidpulver gemäß den Ansprüchen 1 bis 5 und eine basische, quaternäre Ammoniumverbindung in einem wässerigen Medium bei einer Temperatur von 150 bis 220°C über einen Zeitraum von weniger als 12 Stunden behandelt.

**14.** Verfahren nach Anspruch 13, **dadurch gekennzeichnet, dass** 5 ≤ mol Wasser / mol Silicium-Titan-Mischoxid ≤ 30 gilt.

**15.** Verfahren nach den Ansprüchen 13 und 14, **dadurch gekennzeichnet, dass** 0,005 ≤ mol Ammoniumverbindung / mol Silicium-Titan-Mischoxid < 0,20 gilt.

**16.** Verfahren nach den Ansprüchen 13 bis 15, **dadurch gekennzeichnet, dass** als basische, quaternäre Ammoniumverbindung ein Tetraalkylammoniumhydroxid eingesetzt wird.

**17.** Verfahren zur Herstellung eines titanhaltigen Zeolithen, **dadurch gekennzeichnet, dass** man die Dispersion gemäß den Ansprüchen 9 bis 11, gegebenenfalls unter weiterer Zugabe einer basischen, quaternären Ammoniumverbindung, bei einer Temperatur von 150 bis 220°C über einen Zeitraum von weniger als 12 Stunden behandelt.

**18.** Verfahren nach den Ansprüchen 13 bis 17, **dadurch gekennzeichnet, dass** der titanhaltige Zeolith abgetrennt, getrocknet und calciniert wird.


**Revendications**

**1.** Poudre d'oxyde mixte de titane et de silicium pyrogénique, **caractérisée en ce que**

- la surface BET est comprise entre 200 et 400 m$^2$/g,
- le rapport entre l'indice DBP et la surface BET est compris entre 0,5 et 1,2,
- elle comprend une teneur en dioxyde de silicium comprise entre 93,5 et 95,4 % en masse et une teneur en dioxyde de titane comprise entre 4,6 et 6,5 % en masse, où la somme de la teneur en dioxyde de silicium et de la teneur en dioxyde de titane est supérieure à 99,7 % en masse, où tous les pourcentages sont basés sur la quantité totale de la poudre.

**2.** Poudre d'oxyde mixte de titane et de silicium pyrogénique selon la Revendication 1, **caractérisée en ce que** la surface BET est comprise entre 250 et 350 m$^2$/g.

**3.** Poudre d'oxyde mixte de titane et de silicium pyrogénique selon les Revendications 1 et 2, **caractérisée en ce que** la teneur en dioxyde de silicium est comprise entre 94 et 95 % en masse et la teneur en dioxyde de titane est comprise entre 5 et 6 % en masse, et la somme de la teneur en dioxyde de silicium et de la teneur en dioxyde de titane est supérieure à 99,9 % en masse.

4. Poudre d'oxyde mixte de titane et de silicium pyrogénique selon les Revendications 1 à 3, **caractérisée en ce que** la teneur en Al, Ca, Co, Fe, K, Na, Ni et Zn est inférieure à 50 ppm.

5. Poudre d'oxyde mixte de titane et de silicium pyrogénique selon les Revendications 1 à 4, **caractérisée en ce que** la teneur en chlorure est inférieure à 700 ppm.

6. Procédé de préparation de la poudre d'oxyde mixte de titane et de silicium selon les Revendications 1 à 5, **caractérisé en ce que**

   - 93,5 à 95,4 parts en masse, calculées par rapport à $SiO_2$, d'halogénure de silicium et 4, 6 à 6,5 parts en masse, calculées par rapport à $TiO_2$, d'halogénure de titane sont évaporées et les vapeurs sont transférées dans une chambre de mélange,
   - séparément de celles-ci, l'hydrogène et l'air primaire sont transférés dans la chambre de mélange,
   - le mélange des vapeurs d'halogénure de silicium et d'halogénure de titane, le gaz de combustion contenant de l'hydrogène et l'air primaire sont ensuite enflammés dans un brûleur et la flamme brûle dans une chambre de réaction,
   - de plus, l'air secondaire est introduit dans la chambre de réaction, puis le solide est éliminé des substances gazeuses, et
   - ensuite, le solide est très substantiellement libéré des substances contenant des halogénures par un traitement à la vapeur à des températures comprises entre 250 et 700 °C,
   - où la teneur des matières premières constituées de chlorure de silicium, de chlorure de titane, de gaz de combustion, d'air primaire et d'air secondaire est choisie de sorte à obtenir une température de flamme adiabatique $T_{ad}$ pour laquelle

   $$900 \text{ °C} < T_{ad} < 1300 \text{ °C},$$

   où
   $T_{ad}$ = température des matières premières + somme des enthalpies réactionnelles des réactions secondaires/capacité thermique des substances qui quittent la chambre de réaction incluant du dioxyde de silicium, de l'eau, du chlorure d'hydrogène, le cas échéant du dioxyde de carbone, de l'oxygène, de l'azote, et le cas échéant du gaz vecteur s'il ne s'agit ni d'air ni d'azote, la valeur de base étant la capacité thermique spécifique de ces substances à 1000 °C.

7. Procédé selon la Revendication 6, **caractérisé en ce que** l'halogénure de silicium utilisé est $SiCl_4$, l'halogénure de titane utilisé est $TiCl_4$, et $T_{ad} = 1050 \pm 50$ °C.

8. Procédé selon les Revendications 6 et 7, **caractérisé en ce que** le débit de sortie $v_{Br}$ des gaz utilisés depuis le brûleur vers la chambre de réaction est compris entre 10 et 80 m/s.

9. Dispersion qui présente un pH compris entre 9 et 14 et inclut la poudre d'oxyde mixte de titane et de silicium pyrogénique selon les Revendications 1 à 5 présentant un diamètre moyen des agrégats des particules d'oxyde mixte de titane et de silicium dans la dispersion de moins de 200 nm et de l'eau, où $12 \leq$ moles d'eau/moles d'oxyde mixte de titane et de silicium $\leq 30$.

10. Dispersion selon la Revendication 9, **caractérisée en ce qu'**elle comprend un composé d'ammonium quaternaire basique.

11. Dispersion selon la Revendication 10, **caractérisée en ce que** $0,005 \leq$ moles de composé d'ammonium/moles d'oxyde mixte de titane et de silicium < 0,20.

12. Procédé de préparation de la dispersion selon les Revendications 9 à 11, **caractérisé en ce que**

   - à une phase liquide qui est mise en circulation par le biais d'une machine à rotor/stator dans un réservoir et se compose d'eau et d'une ou de plusieurs bases qui sont présentes à une teneur telle que le pH est compris entre 10 et 12,

- par le biais d'un appareil de remplissage alors que la machine à rotor/stator fonctionne, une telle teneur de poudre d'oxyde mixte de titane et de silicium selon les Revendications 1 à 5 est introduite dans la zone de cisaillement entre les fentes des dents du rotor et les fentes du stator de sorte à obtenir une dispersion présente à une teneur en poudre d'oxyde mixte de titane et de silicium de 20 à 40 % en masse, le pH étant maintenu entre 10 et 12 par addition continue supplémentaire du composé d'ammonium quaternaire basique, et
- une fois toute la poudre d'oxyde mixte de titane et de silicium ajoutée, l'appareil de remplissage est fermé et le cisaillement est poursuivi de sorte à ce que la vitesse de cisaillement soit comprise dans l'intervalle allant de 10 000 à 40 000 s$^{-1}$, et
- le cas échéant, de l'eau et/ou une base supplémentaire sont ensuite ajoutées pour ajuster la teneur en poudre d'oxyde mixte de titane et de silicium et le pH.

13. Procédé de préparation d'une zéolithe contenant du titane, **caractérisé en ce que** la poudre d'oxyde mixte de titane et de silicium selon les Revendications 1 à 5 et un composé d'ammonium quaternaire basique sont traités dans un milieu aqueux à une température comprise entre 150 et 220 °C sur une durée de moins de 12 heures.

14. Procédé selon la Revendication 13, **caractérisé en ce que** $5 \leq$ moles d'eau/moles d'oxyde mixte de titane et de silicium $\leq 30$.

15. Procédé selon les Revendications 13 et 14, **caractérisé en ce que** $0{,}005 \leq$ moles de composé d'ammonium/moles d'oxyde mixte de titane et de silicium $< 0{,}20$.

16. Procédé selon les Revendications 13 à 15, **caractérisé en ce que** le composé d'ammonium quaternaire basique utilisé est un hydroxyde de tétraalkylammonium.

17. Procédé de préparation d'une zéolithe contenant du titane, **caractérisé en ce que** la dispersion selon les Revendications 9 à 11, le cas échéant avec addition supplémentaire d'un composé d'ammonium quaternaire basique, est traitée à une température de 150 à 220 °C sur une période de moins de 12 heures.

18. Procédé selon les Revendications 13 à 17, **caractérisé en ce que** la zéolithe contenant du titane est éliminée, séché et calciné.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003129153 A

- EP 814058 A

**Non-patent literature cited in the description**

- VDI-Wärmeatlas